# EUROPEAN PATENT SPECIFICATION

(11) **EP 2 095 927 B1**
(45) Date of publication and mention of the grant of the patent: **17.07.2019**
(21) Application number: 07834484.3
(22) Date of filing: 30.08.2007
(51) Int. Cl.: B29C 44/04, B29C 44/22, B29C 44/44, B29K 25/00, B29K 105/04, B29L 31/10

(54) **METHOD FOR PRODUCING CONTINUOUS EXPANDED POLYSTYRENE FOAM PARTS**
VERFAHREN ZUR HERSTELLUNG VON DURCHGEHENDEN EXPANDIERTEN POLYSTYROLSCHAUMTEILEN
PROCÉDÉ DE PRODUCTION D'ÉLÉMENTS CONTINUS EN MOUSSE DE POLYSTYRÈNE EXPANSÉ

(30) Priority: 30.08.2006 MX GT06000017
(43) Date of publication of application: 02.09.2009
(73) Proprietor: Universidad de Guanajuato, C.P. 36000 Guanajuato (MX)
(72) Inventor: PLASCENCIA MORA, Héctor, C.P. 36000 Guanajuato (MX); AGUILERA CORTÉS, Luz Antonio, C.P. 36000 Guanajuato (MX)
(74) Representative: Elzaburu S.L.P.
(86) International application number: PCT/MX2007/000103
(87) International publication number: WO 2008/026908

(56) References cited:
- CH-A- 527 054
- ES-T3- 2 191 809
- FR-A- 1 470 412
- GB-A- 1 222 641
- GB-A- 1 402 115
- GB-A- 1 546 153
- NL-A- 7 614 289
- US-A- 3 709 651
- US-A- 4 539 167
- US-A- 4 756 859
- US-A- 5 786 000

## Description

### OBJECT OF THE INVENTION

This process has been designed for the manufacturing of continuous polystyrene foam (EPS) parts having a longitudinally-constant cross-section geometry. The piece is obtained by joining partially pre-shaped segments, using an equipment with two chambers, a pre-firing one and a final firing one, thus permitting the joining of materials having the same or different densities both in the longitudinal and transversal directions, so that a new product having different mechanical properties localized in different zones inside the piece, such as thermal conductivity, flexural strength, compressive strength, elasticity module, etc. is obtained.

### BACKGROUND OF THE INVENTION

In the state of the art for the manufacturing of constant cross-section polystyrene foam elements, pieces having a homogeneous density and a maximum length determined by the mould size in the discontinuous methods, or a variable length when they are produced in a continuous mode, and having a constant cross-section with same density along the whole piece, can be produced.

At the present time there are three processes by which objects of constant cross section can be produced:
1.- The direct press moulding, comprising three steps: pre-expansion of the expansible polystyrene beads, stabilization or intermediate resting of the pre-expanded beads, and final moulding with the desired geometry. When using this process with a mould having the desired profile geometry, in this point the process is finished. However, the length of product is limited by the dimensions of the machine and by the maximum distance that moulds can be separated when the equipment is opened. The density of pieces is homogeneous all along the piece.
2.-Cutting from blocks, for which six steps are followed: pre-expansion of the polystyrene beads, stabilization or intermediate resting of the pre-expanded beads, final moulding of the blocks, stabilization of the block, mechanization of the desired geometry and final arrangement or recycling of wastes. When using this process, pieces having dimensions larger than those obtained when using the direct press moulding method can be produced, but their length is limited by the geometry of the cutting equipment and in addition, the manufacturing of pieces having mixed densities localized in different areas is not possible. A disadvantage of this process is that wastes, which have to be recycled, are generated.
3.-Continuous moulding, comprising four steps: pre-expansion of the polystyrene beads, stabilization or intermediate resting of the pre-expanded beads, partial moulding and final moulding, with variants among them.

In particular, there are applications in building industries, although not limited to this type of industry, requiring large quantities of constant cross-section pieces. This kind of pieces is subjected to different flexural strength charges within their cross-section. Therefore, certain portions of their cross-section become charged to their strength limit, whereas other regions are only charged to a small portion of their maximum limit. For this reason, the material is sub-employed. The manufacturing methodology hereby developed comprises four steps: pre-expansion, intermediate resting, partial moulding and final moulding. The introduction of materials with different densities in the partial moulding chamber gives the possibility of joining materials having different granulometries and densities in the longitudinal and transversal directions, although arbitrary orientations could be achieved. The advantage implied by the possibility to manage the localization of the densities is that mechanical properties such as thermal conductivity, flexural strength, compressive strength, module of elasticity, etc. can be controlled as required in each application, so that the amount of material required to produce a piece is reduced, thereby resulting in a reduction in costs.

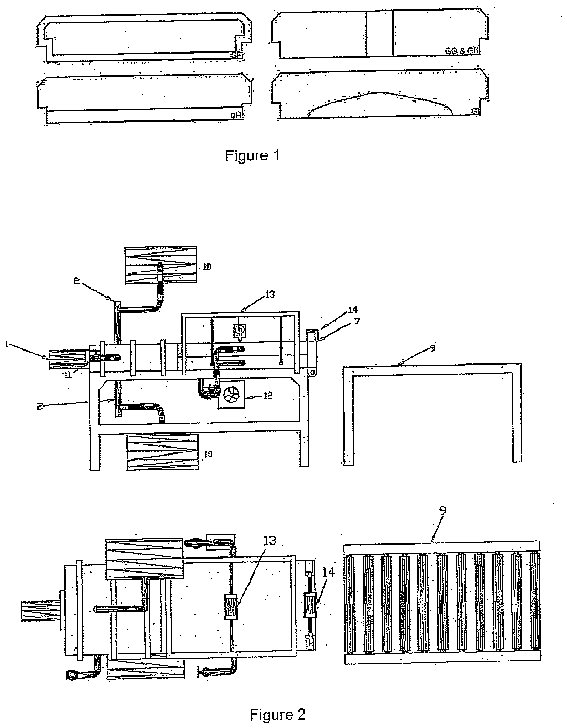

There are several patented equipments (patents US4695416, US4539167, US3830604, US3674387) performing the continuous moulding of EPS "blocks" in a similar way to the present invention, but our proposal has important differences and advantages in relation to the existing ones. They can be summarized in the use of a clamp to tie the segments of finished material at the exit of the mould, so that they function as a wall of the mould during the manufacturing and the final firing of the pre-fired segment, the use of two vaporization chambers, a pre-firing one and a final foam firing one, and the management of different densities both in the longitudinal and in the transversal directions, although an arbitrary orientation could be achieved. The proposed equipment to manufacture this new kind of product, which is characterized by a constant cross-section of arbitrary length and mixed densities along the element localized by zones is shown in Figure 1.

US 4,756,859 discloses a method for obtaining polystyrene products having portions of different densities and thus different mechanical strengths.

### DETAILED DESCRIPTION OF THE INVENTION.

A new process to produce polystyrene foam pieces having an arbitrary length and with mixed densities located by zones is proposed, comprising the following steps: Pre-expansion of expansible polystyrene beads to several required densities (from 7.5 to 60 kg/m³), intermediate resting, independent for each material at each density, in containers having meshes allowing the air to enter inside (from 3 to 10 hours depending on the density at atmospheric conditions), simultaneous feeding of each density using independent injectors into the desired region within the pre-firing chamber at a pressure higher than the atmospheric, which chamber has one or several dividers to keep the regions separated according to their density during the partial firing using saturated steam at 20 kPa manometric pressure for 15 seconds; the divider is removed and then the pre-fired element is introduced into a final firing chamber where it is tied by a clamp during the final firing step using saturated steam at 100kPa manometric pressure for 15 seconds. Simultaneously to the firing of the segment present in the final firing chamber, the process described in the pre-firing step is repeated in the pre-firing chamber, in such way that consecutive segments are joined to form a continuous piece.

The products that can be manufactured by this new process possess certain characteristics that distinguish them from others produced by existing processes. One of the main advantages is the possibility to manage the location of the densities by zones, thus permitting the control of mechanical properties such as: Thermal resistance (which is in a range between 0.51-0.84 m²K/W), flexural strength (which is in a range between 70 and 345 kPa), compressive strength (which is between 35-173 kPa), elasticity module (which is between 1-3 MPa), etc., thus optimizing the use of material in each application and thereby resulting in important reductions in costs.

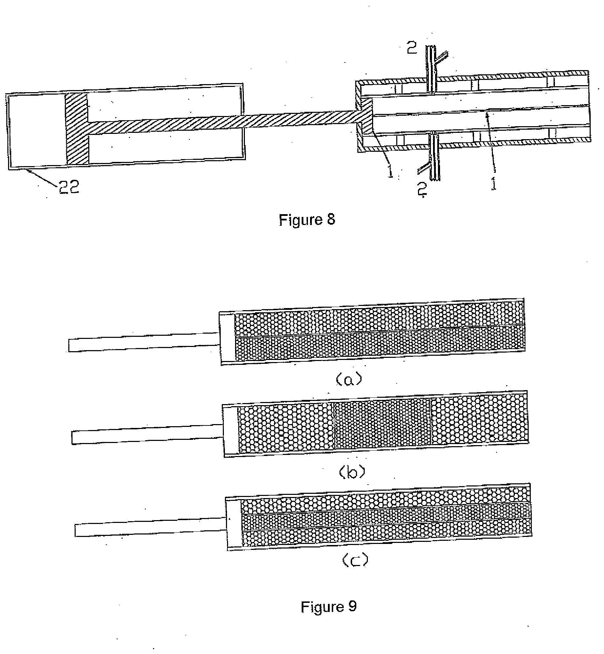

A machine to perform this process is shown in Figures 2-8 and is comprised by twenty two main components: 1. Pusher with density divider; 2. Bead injector; 3. Pre-firing chamber; 4. Separator; 5. Firing chamber; 6. Clamp, 7. Front door; 8. Cooling system; 9. Base with rollers; 10. Hopper for the feeding of EPS beads pre-expanded to different densities; 11. Low-pressure steam feeding valve; 12. High-pressure steam feeding valve; 13. Firing chamber closing system; 14. Front door closing system; 15. Cooling valve; 16. Steam nozzles; 17. Mould backings; 18. Firing chamber top mould; 19. Firing chamber bottom mould; 20. Mould sealing assembly; 21. Drainages to atmosphere and 22: Linear actuator. The continuous moulding manufacturing system is as follows: First: both steam chambers (3, 5) are pre-heated by opening the valves (11, 12) for 30 seconds, which valves work in an independent manner to feed saturated steam to the pre-firing chamber at a manometric pressure of 20kPa and to the firing chamber at 100 kPa. The valve connecting the moulding chamber to the cooling system has to be kept opened so that the steam may flow to the atmosphere. Second: The firing chamber (5) is closed and locked by its closing system (13), and the front door (7) is closed and locked by its closing system (14). The pusher must be placed with the density divider (1) in a retracted position. Third: The EPS beads pre-expanded at different densities, which are stored in the hoppers (10) -two in the present case, although they could be more-, are simultaneously injected into the pre-firing chamber using commercial injectors. Fourth: The cooling valve (15) is closed and the pre-firing chamber (11) steam valve is opened until a pressure of 20 kPa is reached for 15 seconds and then the valve (11) is closed. Fifth: The front door (7) and the firing chamber (5) are opened. Sixth: The pusher separator (1) is operated to move the pre-fired segment into the firing chamber (5), the firing chamber (5) is closed and locked using its closing systems (13) in order to impart a pressure to the pre-fired material; the separator pusher (1) is then returned to its retracted position. Seventh: new material is injected into the pre-firing chamber as in the third step (11); steam is fed into the firing chamber until a 100 kPa pressure is reached, keeping this pressure for 5 seconds and also simultaneously into the pre-firing chamber (11) at the conditions of the fourth step. Eighth: The cooling system (8) is operated and the cooling valve (15) is opened for 45 seconds. Ninth: The firing chamber (5) is opened and the process is repeated, starting from the sixth step, so that the finished material is moved over the base with rollers (9). This process is repeated until a material having the desired length is obtained. A variant is carried out removing the density separator installed in the pusher (1), Fig 9, thus allowing us to obtain segments having different alternated densities at a minimum length equal to the length of the pre-firing chamber (3). Several of the advantages of producing an EPS piece in a continuous form and having mixed densities are: an element of arbitrary length can be produced using a mould having dimensions lower than the final piece. The mixed densities allow an optimization in the use of material because, due to the fact that the density is controlled by zones in the final piece, the mechanical properties of the material can be manipulated since they depend strongly on the apparent density, so that the elements obtained can have improved properties in accordance with the desired application. In addition, when using the process of the present invention, the number of steps in the traditional process to produce large size pieces is reduced, because by using this innovative process only the raw material is pre-expanded, allowed to rest and then moulded into the desired element, instead of having to mould first a block having dimensions larger than the desired piece, allowing it to stand for 24 hours, mechanizing it by hot cutting wires and then recycling the wastes of the block.

Figure 2 shows a top view and a side view of the machine used for producing the EPS elements in a continuous form and with mixed densities controlled by zones by using the process of the invention, showing the following elements:
1. Pusher with density divider.
2. Bead injectors.
3. Pre-firing chamber.
5. Firing chamber.
7. Front door.
8. Cooling system.
9. Base with rollers.
10. Hoppers for the feeding of EPS beads pre-expanded to different densities.
11. Low pressure steam feeding valve.
12. High pressure steam feeding valve.
13. Firing chamber closing system.
14. Front door closing system.
15. Cooling valve.

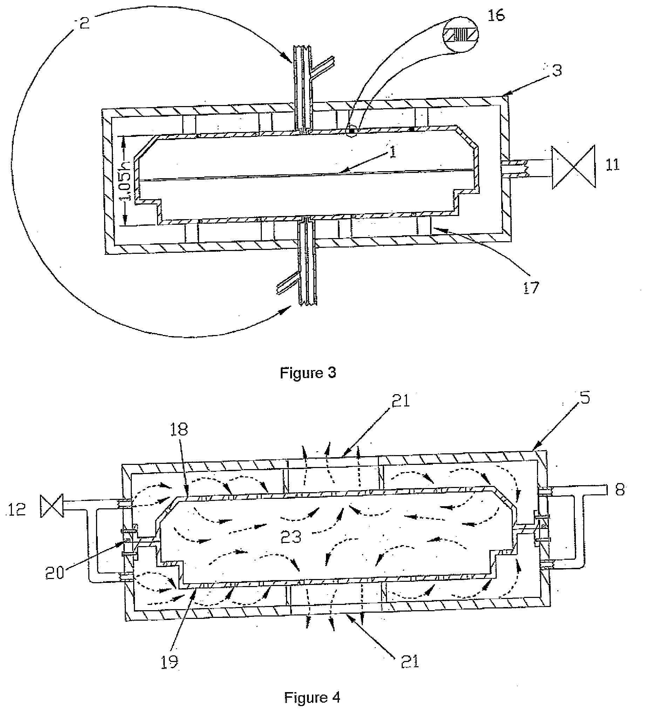

Figure 3 shows a cross-sectional view of the pre-firing chamber (3), comprising the following parts: 1. Pusher with a density divider, 2. Bead injectors, 3. Pre-firing chamber, 11. Low pressure steam feeding valve, 16. Steam nozzles, 17.Mould backings. In this chamber, the injection of the polystyrene beads pre-expanded to different densities is achieved by the simultaneously injection from injectors (2), while the divider (4) avoids the mixing of different materials. Mould backings (17) support the mould walls on the external steam chamber to avoid bendings due to the internal pressure. Steam is flown towards inside the chamber through the nozzles (16) by operating the low pressure steam feeding valve (11).

Figure 4 shows a cross-sectional view of the firing chamber (5) and clamp (6), comprising the following parts: top mould firing chamber (18), bottom mould firing chamber (19), mould sealing assembly (20), and drainages to the atmosphere (21). The firing chamber (5) is separated in the vertical direction in two parts: The top mould firing chamber (18) and the bottom mould firing chamber (20), to allow that the segment, pre-fired in the pre-firing chamber (3) having a height of 1.05·h, can be introduced into this cavity having a lower height, 1.02·h at the separator (4) and h at the clamp (6), where h is the final height of the shaped product. Once the material is placed for firing, the chamber is closed and steam is introduced by the high pressure feeding valve (12), and then the chamber is cooled by the cooling system (8). To avoid steam leakages between the moulds and the air inlet during the cooling process, the mould sealing assembly (20) is used.

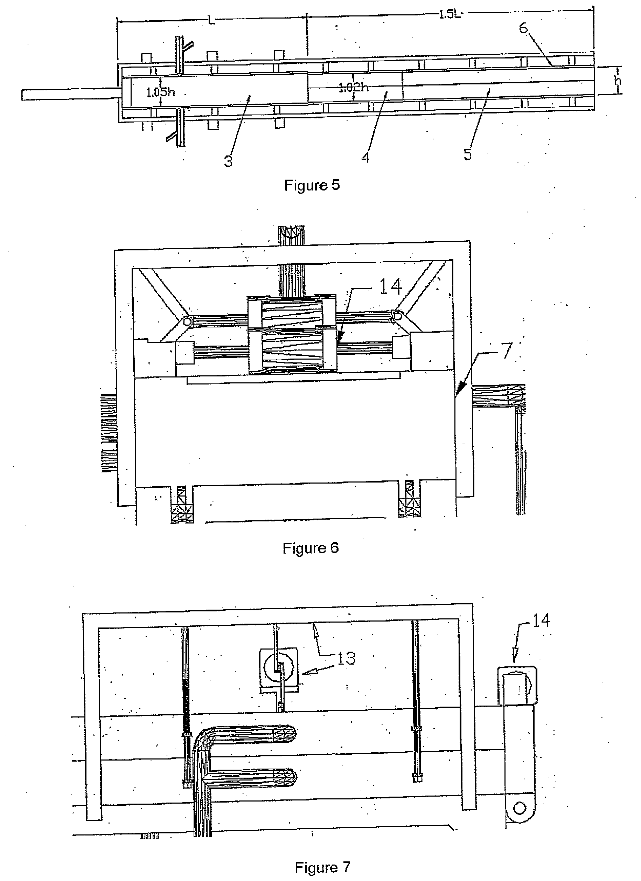

Figure 5 shows the geometric relations applied in this process using a longitudinal cut of the mould sections: Pre-firing chamber (3) having a chamber height of 1.05·h, where h is the final height of the finished product, this section having a length L. Separator (4) having a closed chamber height equal to 1.02·h and a length equal to 0.5 times L. Firing chamber (5) having a closed chamber height equal to h and a length equal to L. Clamp (6), which is part of the firing chamber because upon entering in this section a pre-fired segment, it is compressed 0.2 times h, thus applying a pressing force avoiding the expulsion of the material by the steam pressure when the front door is opened (7).

Figure 6 shows a detail of the closing system (14) and the front door (7), consisting in wedges which are extended when the door is closed by using a linear actuator fixed on top of the firing chamber (5), which introduce them into two mechanized wedged holes with holders being part of the front door (7), thus restricting the turning movement towards the front, so that the front part of the firing mould is hermetically sealed during first firing of the material.

Figure 7 shows a detail of the mechanical system allowing the opening and closing of the firing chamber and the clamp to allow the movement of a pre-fired segment to the separator zone and the firing chamber, having a minimum opening of 1.06 times h, and at the same time the system protects the chamber when it is closed, to avoid that steam pressure may open it.

Figure 8 shows a longitudinal cross-sectional view of the system comprised by the linear actuator (22) and the pusher with the density divider (1). This divider may not be present and the pieces produced will have the density distribution as shown in figure 9a. If only one divider is maintained, or if n-dividers are placed, pieces having the distribution of densities as shown in Figures 9b and 9c respectively are obtained.

Some advantages of producing an EPS piece in a continuous form and having mixed densities are: an element of arbitrary length can be produced using a mould smaller than the final piece. The mixed densities allows an optimization in the use of material, because due to the fact that the density of the final piece is controlled by zones, the mechanical properties of this material can be directly manipulated, since they depend strongly on the apparent density. According the innovative process claimed, the number of steps of the traditional process to produce large size pieces is reduced because when using the present process only the raw material is pre-expanded, allowed to rest, and then moulded in to the desired shape, instead of moulding first a block having dimensions larger than the desired piece, then allowing it to stand for 24 hours, mechanizing it by the use of cutting hot wires and then recycling the waste of the block.

### BRIEF DESCRIPTION OF THE FIGURES.

Figure 1. Solid product with mixed densities.
Figure 2. Side and top view of the manufacturing equipment.
Figure 3. Cross-sectional view of pre-firing chamber.
Figure 4. Cross sectional view of firing chamber and clamp.
Figure 5. Longitudinal cross section of pre-firing and firing chambers and clamp.
Figure 6. Detail of the front door.
Figure 7. Detail of the firing chamber closing system and clamp.
Figure 8. Detail of the pusher separator assembly.
Figure 9. Schematic distribution of the densities obtained: a) without divider, b) with one divider and c) with n-dividers.

## Claims

1. A process for the manufacturing of continuous polystyrene foam elements having mixed densities in the longitudinal, transversal or arbitrary directions, wherein the method comprises the following steps:
pre-expanding the expansible polystyrene beads to several densities from 7.5 to 60 kg/m³ as required; intermediate resting, which is independent for each material at each density, in containers having meshes allowing the air to enter inside, from 3 to 10 hours depending on the density at the atmospheric conditions; simultaneous feeding of the material at each density using independent injectors (2) into the desired region inside the pre-firing chamber (3) at a pressure higher than the atmospheric, which chamber (3) comprises one or several dividers (1) for maintaining the regions separated according to their density during a partial firing using saturated steam at a manometric pressure of 20kPa for 15 seconds; extracting the divider (1) and introducing the pre-fired element into a final firing chamber (5), where said pre-fired element is tied by a clamp (6) during the final firing step by saturated steam at a manometric pressure of 100kPa during 15 seconds; simultaneously to the firing of the element located in the final firing chamber (5), the process described for the pre-firing stage is repeated in said pre-firing chamber (3), in such a way that a continuous piece is formed by joining the consecutive segments.

## Patentansprüche

1. Prozess zur Herstellung kontinuierlicher Polystyrolschaumstoffelemente, die in Längs-, Quer- oder beliebiger Richtung gemischte Dichten aufweisen, wobei das Verfahren die folgenden Schritte umfasst: Vorexpandieren der expandierbaren Polystyrolkügelchen auf diverse Dichten von 7,5 bis 60 kg/m³ je nach Bedarf; zwischendurch Ruhen auf für jedes Material bei jeder Dichte unabhängige Weise in Behältern, die Maschen aufweisen, sodass Luft ins Innere treten kann, je nach Dichte bei den Atmosphärenbedingungen 3 bis 10 h lang; gleichzeitiges Einspeisen des Materials bei jeder Dichte in den gewünschten Bereich im Inneren der Vorbrennkammer (3) unter Verwendung unabhängiger Einspritzer (2) bei einem höheren als dem Atmosphärendruck, wobei die Kammer (3) einen oder mehrere Teiler (1) zum Getrennthalten der Bereiche je nach ihrer Dichte während eines 15-sekündigen Teilbrennens unter Verwendung von Sattdampf bei einem manometrischen Druck von 20 kPA umfasst; Herausnehmen des Teilers (1) und Einbringen des vorgebrannten Elements in eine Abschlussbrennkammer (5), wo das vorgebrannte Element während des Abschlussbrennschritts durch Sattdampf bei einem manometrischen Druck von 100 kPA während 15 Sekunden durch eine Klammer (6) fixiert wird; gleichzeitig mit dem Brennen des in der Abschlussbrennkammer (5) angeordneten Elements wird der für die Vorbrennstufe beschriebene Prozess in der Vorbrennkammer (3) derart wiederholt, dass durch Verbinden der aneinandergereihten Segmente ein kontinuierliches Stück gebildet wird.

## Revendications

1. Procédé pour la fabrication d'éléments continus en mousse de polystyrène présentant un mélange de densités dans les sens longitudinal, transversal ou quelconque, dans lequel le procédé comprend les étape suivantes : pré-expansion des billes de polystyrène apte à l'expansion en plusieurs densités allant de 7,5 à 60 kg/m³ selon les besoins ; mise au repos intermédiaire qui est indépendante pour chaque matériau à chaque densité, dans des conteneurs possédant des tamis permettant à l'air de pénétrer à l'intérieur, d'une durée de 3 à 10 heures en fonction de la densité dans les conditions atmosphériques ; alimentation simultanée en matériau à chaque densité en utilisant des injecteurs indépendants (2) dans la zone souhaitée à l'intérieur de la chambre de pré-cuisson (3) à une pression supérieure à la pression atmosphérique, ladite chambre (3) comprend un ou plusieurs séparateurs (1) pour maintenir les zones séparées en fonction de leur densité durant une cuisson partielle en utilisant de la vapeur saturée à une pression manométrique de 20 kPa pendant 15 secondes ; extraction du séparateur (1) et introduction de l'élément précuit dans une chambre de cuisson finale (5), où ledit élément précuit est attaché par un collier de serrage (6) durant la phase de cuisson finale par de la vapeur saturée à une pression manométrique de 100 kPa pendant 15 secondes ; simultanément à la cuisson de l'élément situé dans la chambre de cuisson finale (5), le procédé décrit pour l'étape de pré-cuisson est répété dans ladite chambre de pré-cuisson (3), de façon qu'une pièce continue soit formée par la jonction de segments consécutifs.
